# EUROPEAN PATENT APPLICATION

(11) **EP 3 975 133 A1**
(43) Date of publication of application: **30.03.2022**
(21) Application number: 21199269.8
(22) Date of filing: 27.09.2021
(51) Int. Cl.: G06V 10/44, G06V 20/56, G06V 10/25, G06V 20/58, G08G 1/01

(54) **PROCESSING OF IMAGES CAPTURED BY VEHICLE MOUNTED CAMERAS**

(30) Priority: 28.09.2020 GB 202015326
(71) Applicant: Trakm8 Ltd, Shaftesbury, Dorset SP7 9QJ (GB)
(72) Inventor: COWLEY, Matthew William, Shaftesbury, SP7 9QJ (GB); COWLEY, Timothy Adam, Shaftesbury, SP7 9QJ (GB)
(74) Representative: Script IP Limited

(57) **Abstract**

A method of processing images captured by an on-vehicle camera, circuitry and the on-board camera are disclosed The method comprises: performing scene analysis on image data received from the on-vehicle camera to identify regions of greater interest and regions of lesser interest in images in the image data; processing the image data to preferentially reduce the information in the regions of lesser interest to generate processed image data; and compressing at least a portion of the processed image data to generate compressed image data.

## Description

### FIELD OF THE INVENTION

The field of the invention relates to vehicle mounted cameras and the processing of images captured by such cameras.

### BACKGROUND

Dashboard mounted cameras are used increasingly often. They generally have wide angled lenses to capture a broad picture in high definition. Information from the cameras and from a telematics device mounted on the vehicle may be transmitted to a remote analysis centre for analysis and access by a user. Wireless transmission techniques have limited bandwidth and make the transmission of video data from a wide angled, high definition camera, even using advanced data compression techniques, both expensive and in some instances not possible.

It would be desirable to be able to capture data from a vehicle mounted camera and process it to facilitate transmission to a remote analysis centre.

### SUMMARY

A first aspect provides a method of processing images captured by an on-vehicle camera, said method comprising: performing scene analysis on image data received from said on-vehicle camera to identify regions of greater interest and regions of lesser interest in images in said image data; processing said image data to preferentially reduce the information in said regions of lesser interest to generate processed image data; compressing at least a portion of said processed image data to generate compressed image data; receiving data from a telematics device; and outputting said compressed image data along with at least some telematics data that was sensed at a time that said image date was captured.

The inventor recognised that much of a scene captured by a vehicle mounted camera is not of interest to the user although it may provide useful context. He also recognised that the problems associated with limited bandwidth for transmission of data captured by a camera could be addressed, if the image could be processed so that the regions of interest are transmitted with higher information density than the regions of lesser interest. In order to do this scene analysis circuitry is provided for analysing the images to detect regions of greater interest within the images, other regions being deemed to be of lesser interest. The images are then processed to reduce the information in the regions deemed to be of lesser interest. This allows the resulting processed image to be more efficiently compressed such that the images from the camera have a reduced data size and may be transmitted using a lower bandwidth.

By processing the image data to preferentially reduce the information in the regions of lesser interest such that the information in these regions is reduced by more than it is in the regions of greater interest, the amount of data is reduced in a targeted manner.

Vehicles increasingly comprise telematics devices which collect data from the vehicle network such as from the CAN bus and/or from other vehicles and/or from street furniture and which may transmit this data to a remote station. All of this information may be relevant to and may inform the image that is collected and thus, outputting data collected from these devices with images collected at the same time can allow the user viewing the images to determine further information regarding the image. This allows information such as the speed that car was travelling at, that it had just swerved, that a subsequent car had braked suddenly or was travelling at a certain speed and/or that an emergency vehicle is in the vicinity to be available with the image data allowing the image data to be understood in the context of the dynamic traffic conditions.

In some embodiments, said processing comprises filtering said regions of lesser interest to reduce the information in said regions.

One way of reducing the information in regions of lesser interest may be to use filtering techniques. Filtering can be done in a low cost and efficient manner and not only removes information but does so in a way that allows the remaining information to be efficiently compressed.

It should be noted that the division of the image into regions of greater and lesser interest can be done with different granularity. So in some cases, regions of interest and regions of little interest are identified and information is removed from the regions of little interest. In other embodiments, regions of great interest such as the area around a number plate on a vehicle are identified, regions of some interest such as regions having moving objects within them are identified and other regions of little interest are identified. Processing the image may include enhancing of the regions of great interest, and removing information from the regions of little interest.

In some embodiments, said processing comprises performing edge detection to detect edges in said regions of lesser interest and retaining detected edges and discarding at least some other data to reduce the information of said regions of lesser interest.

An alternative and/or additional way of reducing the information in the regions of lesser interest while still retaining parts of the region of more significance may be to use edge detection techniques such that the outline of objects is kept.

Alternatively, and/or additionally the step of processing may reduce the contrast for the regions of lesser interest and in this way remove information from them. The regions of greater interest may have their contrast maintained or in some cases they may have it enhanced.

In addition to reducing the information in the regions of lesser interest the regions of greater interest may have the amount of information maintained or in some embodiments the image data in these regions may be enhanced. Enhancement may take a number of forms, for example the region of greater interest may be made brighter and/or the contrast amplified.

In some embodiments, said compressing step compresses said lower information regions more than said higher information regions.

The compressing may be configured to compress the regions of lower interest more, this may be done by using more complex compression methods and/or they may simply be compressed more owing to the removal of some of the information leaving the remaining data easier to compress. In this regard, there is less likely to be differences between neighbouring areas and neighbouring frames where much of the information has been removed and this allows data to be more effectively compressed as the data for a particular area need only be sent once and the following information may simply be that the data remains unchanged or mostly unchanged in the subsequent frame and/or that the adjacent area also contains similar information.

In some embodiments, said scene analysis is performed by machine learning algorithms such as deep learning algorithms.

The analysis of scenes to identify regions of greater interest is a task that is particularly well adapted for machine learning and in particular deep learning algorithms which algorithms can effectively analyse a large amount of data and learn patterns in the data that signify a region of interest and thereafter isolate these regions. These algorithms may be pretrained by analysing similar images and the pretrained algorithms are then loaded onto processing circuitry associated with the on-board camera.

In some embodiments, said scene analysis detects moving objects, at least one of said moving objects being determined to comprise a region of greater interest.

In the context of vehicle mounted cameras, moving objects are likely to be of interest and thus, the scene analysis may involve determining where moving objects are within the images and identifying these as being within regions of interest.

In some embodiments, the scene analysis tracks moving images between frames and this allows the regions of interest to be identified more accurately information from neighbouring frames informing the analysis.

In some embodiments, said step of processing comprises tracking a region of greater interest across a plurality of sequential images and enhancing said region of greater interest by combining information from said plurality of images.

Regions of greater interest may be enhanced by gathering information relevant to the region from multiple images and generating a higher resolution region of the image from the gathered data. As this enhancement procedure uses data from multiple images it does create a delay in transmitting the data. In effect multi-frame image processing and some delay is provided in exchange for an enhanced ROI. There are circumstances where this is not an issue and is acceptable and others where it may not be advantageous.

The enhanced information gathered in this way can be used to build a super resolution image using machine learning and/or a higher quality image using image processing techniques. Considering, for example, an object which is being approached by the vehicle. This is initially small and increases in size within the image and thus, the number of pixels and therefore the resolution increases. These multiple versions of the image can be combined and the images processed to remove shadows and other artefacts. Machine learning techniques may be used to synthesise a super resolution portion of the image relating to that object, which portion has a higher resolution than any of the captured images of the object. An inference of what the object is may also be used to enhance the quality of the image or to provide a 3D render of the object. For example, if it is determined that the object is a pedestrian, then the collected data and knowledge of what the object is can be used to create a 3D render of the object. This is possible as we know a human has certain characteristics such as nose, eyes, arms legs etc. These features can be used to calculate the projection of the image. From this we can re-project the image with a different projection and hence create a reasonable 3D render of the object.

In some embodiments the x,y location, size and projection characteristics of the enhanced region of the image may be transmitted separately to the rest of the images. Only transmitting the enhanced region of interest once will significantly reduce the data transmitted. The ROI can be processed at the receiver side to restore its original projection and position within each frame. A benefit of this approach is the image quality of the ROI in each frame is independent of the size of the image in the frame. Another advantage is that such regions can be processed to provide high resolution hover-over image pop-outs when reviewing the video.

In some embodiments, said compressing step compresses regions of greater and lesser interest separately and said method comprises a further step of storing said compressed lower interest regions and said higher interest regions in a data store.

Compressing the regions separately allows different compression methods to be used and also the regions to be treated differently. Thus, they may be stored separately and/or the region of higher interest may be transmitted while the region of lower interest may not be transmitted but may simply be stored. If the region of lower interest is requested later then it may be retrieved and transmitted. In this regard it may be transmitted on its own or it may be transmitted in conjunction with the corresponding region of higher interest. That is the combination of the regions may be performed on the on-vehicle camera or they may be transmitted separately and be performed remotely.

In some embodiments, said step of processing comprises determining said regions of greater interest using data received from at least one of said further vehicle and said street furniture.

The data collected from the telematics device can also be used in enhancing the regions of greater interest. In this regard, where the information indicates for example that particular street furniture is a certain sign and/or that a particular vehicle is a certain type of vehicle then this can be used in the enhancing of the image.

A second aspect provides a computer program comprising computer readable instructions which when executed by a processor are configured to control the processor to perform a method according to a first aspect.

A third aspect provides circuitry for processing image data generated by an on-vehicle camera, said circuitry comprising: scene analysis circuitry configured to perform scene analysis on said image data to identify regions of greater interest and regions of lesser interest in said images; processing circuitry configured to process said image data to preferentially reduce the information of said regions of lesser interest; compression circuitry configured to compress at least a portion of said processed image data to generate compressed image data; telematics data circuitry configured to receive telematics data; and output circuitry for outputting at least some of said compressed image data along with at least some telematics data that was sensed at a time that said image date was captured.

In some embodiments, the telematics data circuitry comprises circuitry configured to monitor a vehicle network of said vehicle housing said camera and retrieve data indicative of an operation of said vehicle.

The telematics data may be data retrieved from the vehicle network, such as a data bus for example a CAN (control area network) bus on the vehicle, it may also be data retrieved from signals output by other vehicles, or street furniture. The data retrieved from the vehicle network may be retrieved by the telematics data circuitry from a telematics device on the vehicle with which it is in data communication, by a hardwired connection and/or by a wireless connection. Alternatively and/or additionally the telematics data circuitry may itself monitor the vehicle network and retrieve the data from the network. The telematics data circuitry may also monitor and retrieve data output by other vehicles or street furniture.

In some embodiments, processing circuitry is configured to filter said at least one regions of lesser interest to reduce the information of said regions.

In some embodiments, said processing circuitry is configured to detect edges in said regions of lesser interest, said processing circuitry being configured to retain detected edges and discard at least some other data to reduce the information of said regions of lesser interest.

In some embodiments, said processing circuitry is configured to reduce the contrast for said regions of lesser interest while maintaining or enhancing the contrast for said regions of greater interest.

In some embodiments, said compression circuity is configured to compress said regions of lesser interest more than said regions of greater interest.

In some embodiments, said scene analysis circuitry comprises a machine learning algorithm such as a deep learning algorithm.

In some embodiments, said output circuitry is configured to output said at least some of said compressed image data along with at least some telematics data that was sensed at a time that said image date was captured.

In some embodiments, said scene analysis circuitry is configured to detect moving objects, at least one of said moving objects being determined to comprise a region of greater interest.

In some embodiments, said processing circuitry is configured to track a region of greater interest across a plurality of sequential images and to enhance said region of greater interest within said images by combining information from said plurality of images.

In some embodiments, said circuitry further comprises a data store for storing said processed image data.

In some embodiments, said compression circuitry is configured to compress said regions of greater interest and lesser interest of said processed images separately, and said output circuitry is configured to output said compressed regions of higher interest and to store said compressed regions of greater and lesser interest in said data store.

In some embodiments, said circuitry further comprises an input for receiving data from a telematics device, said output circuitry being configured to output said compressed image data along with at least some telematics data that was sensed at a time that said image date was captured.

It should be noted that the telematics data from the vehicle may comprise data collected from the vehicle, data collected from other vehicles and/or data collected from street furniture. It may include an indication of a location of the vehicle, an indication of the speed of the vehicle, an indication of an acceleration or deceleration of the vehicle, an output of a gyroscope on the vehicle, the revolutions per minute, the dashboard speed, the state of charge of the battery, the pedal position and/or environmental data such as the outside temperature. Data sensed from street furniture or from other vehicles may include the speed of the other vehicle, the proximity of the other vehicle, the type of the other vehicle and the type of the signs where it is street furniture.

In some embodiments, said circuitry further comprises an input for receiving data request signals from a remote analyser, said circuitry being configured to output said data in response to said request signals.

In some embodiments, said circuitry further comprises transmission circuitry configured to wirelessly transmit said output data to a remote analyser.

A fourth aspect provides an on-vehicle video camera comprising: a lens for capturing images; an optical sensor for sensing said captured images to generate image data; and circuitry according to a third aspect for processing said image data.

A fifth aspect provides a system for capturing and analysing images captured by an on vehicle camera by said system comprising an on vehicle camera according to a fourth aspect; an analyser remote from said vehicle configured to receive high information image data relating to a portion of images deemed to be of interest and captured by said camera along with data indicative of a time and location that said image was captured; a data store configured to store said data; an input for receiving a user input requesting data identified by at least one of said time and location, said analyser being configured to respond to said request by retrieving image data from said data store corresponding to said at least one of a time and location and outputting said stored image data.

Further particular and preferred aspects are set out in the accompanying independent and dependent claims. Features of the dependent claims maybe combined with features of the independent claims as appropriate, and in combinations other than those explicitly set out in the claims.

Where an apparatus feature is described as being operable to provide a function, it will be appreciated that this includes an apparatus feature which provides that function or which is adapted or configured to provide that function.

### BRIEF DESCRIPTION OF THE DRAWINGS

Embodiments of the present invention will now be described further, with reference to the accompanying drawings, in which:
Figure 1 schematically shows the type of image and how it is divided up into regions by embodiments;
Figure 2 shows a flow chart illustrating steps in a method according to an embodiment; and
Figure 3 schematically shows an on-vehicle camera and associated circuitry according to an embodiment.

### DESCRIPTION OF THE EMBODIMENTS

Before discussing the embodiments in any more detail, first an overview will be provided.

Embodiments relate to a remote in-vehicle camera device which uses scene analysis to isolate high definition regions of interest ROI for use in adaptive compression and real-time wireless transmission over what may be a highly constrained bandwidth wireless network. In some case only the regions of interest are transmitted in high definition, while the remaining image frame which includes the wider scene is captured in low fidelity to provide contextual information but without the high fidelity of the ROI.

In this text the term "fidelity" and "definition" mean different things: "definition" defines the number of pixels in an image; "fidelity" defines how much detail is in an image. You can have high definition, but low fidelity e.g. a 1080p HD image which is blurred and without any details.

For example in a remote number plate detection application there is no need to capture the surrounding buildings, street furniture, trees in high definition, a low definition image is sufficient to provide context. In this application it is preferable if the number plate is transmitted in high definition, while the vehicle may be transmitted at a lower definition and the wider scene at the lowest definition. The overall data requirement is significantly smaller than would be the case were the whole frame transmitted as encoded high definition.

There are several approaches to transmitting the images:-One approach is to remove the high fidelity or reduce the information in the background scene using an image filter. This is then combined this with the high fidelity ROI region of interest to create a new frame of 1,920×1,080 HD 1080p which is then encoded using H.265. This can provide an additional 50% improvement on compression over H.265 depending upon the size of the ROI and the background image. This is achieved because the background image has limited details as it has low fidelity ― i.e. is a relatively plain image.

Alternatively the high definition video and the low definition, low fidelity background video are transmitted separately. This has the advantage that the background image has much fewer pixels and H.265 encoding may not be required. A different compression technique H.264 can be used to save cost within the camera. The server side will have to re-combine using a transcoder.

In a non-real-time scenario:
The camera uses computer vision algorithms to identify and label the regions of interest. The ROI are tagged with location data, telematics data such as accelerometer data, speed data, gyro data, and image frame coordinates. The label metadata is transmitted to the host server. The high definition ROI image data is recorded locally in the camera and the highly compressed background scene is recorded locally for later use.

The host server provides automated indexing, aggregation, searching and a rules engine for exception processing for the purposes of identifying certain pre-defined scenarios. Upon identification of images of interest the host server requests the detailed image / video data from the camera.

In response to the host request for detailed image data, the camera combines the high definition ROI images with the low definition background scene to create a new high definition frame. The background image is upscaled before merging with the ROIs. During this process the background image suffers intentional loss of information of fidelity. The camera compresses the resulting video data using a video encoder such as H.256, or H.264 encoder. Significant Compression up to an additional 50% efficiency is gained because the background image has a much lower fidelity. This is because the H.264 encoder uses few macro blocks; or the H.265 encoder can use larger coding tree units CTU's allowing for greater efficiency. The inter frame motion prediction is more efficient because there are fewer differences between frames.

A deep-learning algorithm would be excellent to detect and label regions of interest. The regions of interest are recorded in high definition, while the remaining scene is highly compressed with some loss of resolution. The resulting overall frame size is highly compressed and suitable for transmission over a wireless network, but crucially interesting aspects of the frame are available in high definition.

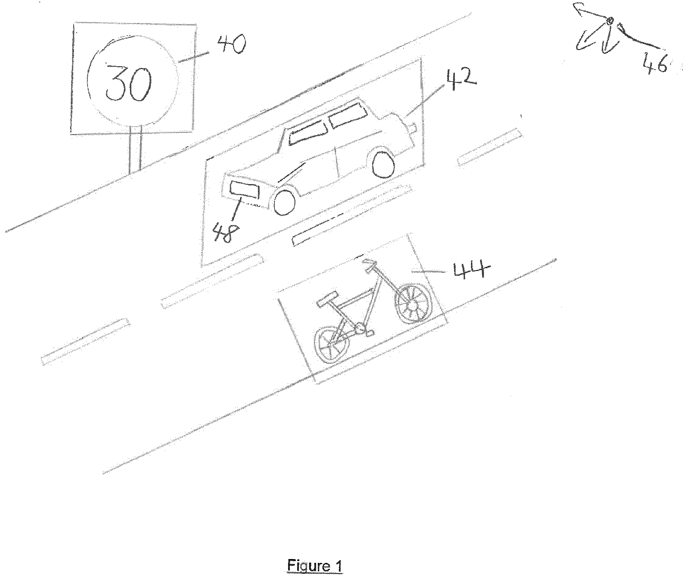

Figure 1 schematically shows a scene captured by an on-vehicle camera and how it is segregated into different regions that are of more or less interest.

In this example image a road scene is captured by a camera on a vehicle that is not shown and in which there is a road sign 40 an approaching vehicle 42 and a cyclist 44 moving away. There is also additional information 46 that is captured by a telematics device on the vehicle having the camera contemporaneously with the capturing of the image and indicates that an emergency vehicle is approaching the scene. This captured information is sent to the processing circuitry associated with the on-vehicle camera. The processing circuitry identifies this as data that is contemporaneous and relevant to this particular image and associates this data as metadata with the image data such that the image information and the meta data are transmitted or stored together as information relevant to the scene at this particular time.

The processing circuitry that processes the captured image from the camera and the associated data received from the telematics device identifies using scene analysis software, which may be in the form of a deep learning algorithm, the regions of greater interest in the scene. In this case it identifies region 48 around the number plate region of vehicle 42 to be a region of great interest and the circuitry processes this portion of the image to enhance it. The enhancement may include increasing the contrast of this portion of the image. The scene analysis software will also identify vehicle 42 as a region of interest as this is a moving object and the scene analysis circuitry can detect moving objects. Similarly, it will detect the cyclist 44 as a region of interest as again this is detected as a moving image. Sign 40 will be identified as a region of interest either from scene analysis using the deep learning algorithm or from additional data received from the telematics device that indicates that this particular piece of street furniture is a sign, the telematics device may also provide an indication of the data that the sign displays.

Thus, the image that the on-vehicle camera captures and data received from the telematics device are used to enhance portions of the image of greater interest and remove information from portions of the image that are not deemed to be of particular interest that is portions other than portions 40, 42, 44 and 48. Additional data related to emergency vehicle 46 is also associated with the processed data from the image. Once the image has been processed by enhancing region 48 and removing information from regions that are deemed to be not of interest, the data can be compressed and the metadata associated with relevant and contemporaneous information for the telematics device can be associated with the compressed data and this can be output or stored. Where it is output it may be transmitted wirelessly to a remote analysing device.

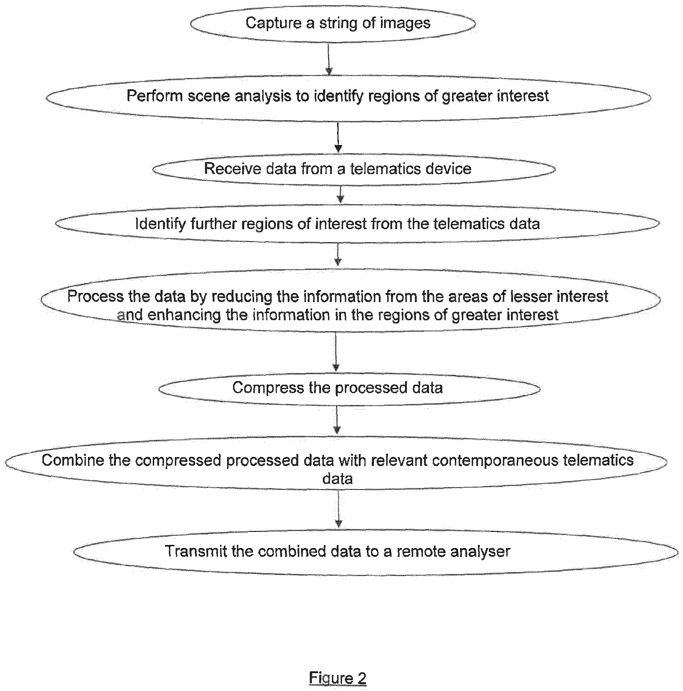

Figure 2 schematically shows steps performed by a method within circuitry on the on-vehicle camera. This circuitry may comprise software that controls the processor to execute the method or it may be hardware that is configured to perform these steps.

In a first step a string of images are captured by an on-vehicle camera. Circuitry on the camera then performs scene analysis to identify the regions of greater interest. In this regard, the granularity of the analysis may simply identify regions of interest and regions of little interest. Alternatively, it may segregate the different regions of interest into different levels of interest, such as those of very high interest, those of high interest and those of lesser interest.

Data is also received from a telematics device and further regions of interest may be identified from the telematics data received. The data that has been received both from the camera and the telematics device may then be processed, the image data being processed by reducing the information from the areas of lesser interest and in some cases enhancing the information in the regions of greater interest. The processed data may then be compressed, and the compressed processed data maybe combined with relevant contemporaneous telematics data which may be in the form of metadata. The combined data may then be transmitted to a remote analyser.

In some embodiments the regions of lesser interest are treated separately to the regions of greater interest and the regions of lesser interest may be stored in a data store and only the regions of greater interest compressed and output. The regions of lesser interest may be transmitted if they are later requested later, at which point they may be combined with the regions of greater interest and the regions output together or they may be output on their own and combined at the analyser.

It should be noted that the steps for performing the scene analysis or receiving data from the telematics device and identifying further regions of interest from this data may be performed in a different order to that illustrated.

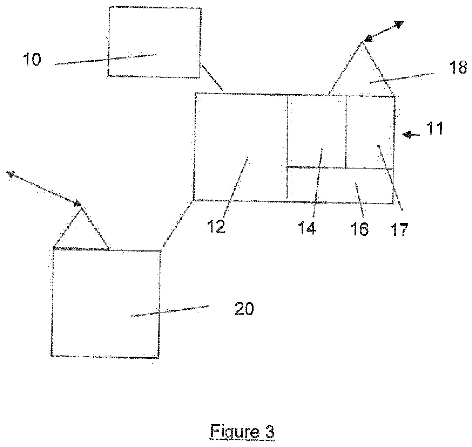

Figure 3 schematically shows on-board camera circuitry associated with the camera and a telematics device mounted on a vehicle.

On-board camera 10 captures images as the vehicle moves and circuitry 11 associated with the camera processes this data and outputs the process data via wireless antenna 18.

Circuity 11 comprises scene analysis circuitry 12 which may be in the form of a machine learning algorithm such as a deep learning algorithm and is configured to analyse the string of images captured by on-board camera 10 and identify regions of greater and lesser interest within these images. Processing circuitry 14 then processes the image data to remove information from the regions of the scene deemed to be of lesser interest and in some cases to enhance the regions of greater interest. In some cases, this may be done using a filtering technique while in others edge detection may be used to identify edges of images within the regions of lesser interest and only retain edge information for that region. Where edge detection is used the data is treated as vector data rather than raster data, the vector data being used to define the outlines of the different features in the image. As can be appreciated outline images of the main features, such as houses or road edges will require far less data than a full image of these features would. Alternatively and/or additionally the contrast of the region of lesser interest may be reduced such that a portion of a scene is rendered to be virtually monochrome. Where the regions of greater interest are enhanced this may be done by for example increasing the contrast or by using meta data regarding that portion of the image to add information to the image.

In some embodiments enhancing one or more regions of greater interest may be done by tracking the regions across multiple images, gathering information from the different images and using it to increase the resolution of this portion of the images.

This information may be added to each image and an enhanced image transmitted, or it may be transmitted separately along with information as to where the regions fit within each image. The latter reduces the amount of information transmitted but requires the information to be added to each image at the receiver side.

Telematics device 20 mounted on the vehicle may transmit information to the circuitry 11 associated with camera 10 and this may include information regarding the operation of the vehicle and in some cases information from other vehicles and street furniture. In some embodiments circuitry performing the functions of the telematics device 20, that is circuitry monitoring and collecting data from the vehicle network, such as a data bus on the vehicle may be within the circuitry 11 associated with the camera 10 rather than on a separate telematics device.

The information collected from the telematics circuitry or device can be used to inform the scene analysis performed by circuitry 12 and to enhance regions of interest. Additionally and/or alternatively the information from the telematics circuitry or device 20 may simply be associated with the processed image data and transmitted as meta data with this image data such that the remote analyser receives information regarding the vehicle as well as the image data. This allows information such as the speed of the vehicle as well as whether it has swerved, the state of the road, and information from other vehicles or street furniture to be associated with a particular image.

The image data processed by circuitry 14 may then be compressed using compression circuitry 17. In this regard, where information has been removed from regions then those regions may compress particularly effectively. For example, where the removal of information is to reduce the contrast and the resulting portion of the image is virtually monochrome then this compresses exceedingly well. The compression techniques used may also be different for the different regions or there may be a single compression technique which simply is more effective on regions where there is less information. The compressed processed data may then be output wirelessly by antenna 18.

Contemporaneous relevant data from the telematics device may be associated with the image data as metadata. In some cases rather than outputting the information wirelessly the information may be stored in data store 16 and it may be output later perhaps in response to a request received at the circuitry.

In some embodiments, the image data may be treated differently depending on whether it concerns a region that is deemed to be of higher or lower interest. Thus, some information may be output wirelessly while some information may simply be stored in data store 16.

Transmitting the telematics data as meta data or label tags only takes a small number of bytes. The label tag that is used to identify the regions of interest can be aggregated with time, duration and location. A remote service may request image data using label tag references. The camera will retrieve the requested sequence of compressed frames from internal storage and combine the image with the high resolution regions of interest which are also stored locally. Combining the high resolution images with the low resolution scene and transmitting this to the remote host over a wireless network.

One benefit is the meta data can be easily search by a user of the system using an Internet portal, this gives the ability to search huge amounts of video data very quickly using tags, location, time, driver behaviour events from telematics, acceleration, braking etc. The interesting events can be easily replayed in high definition without incurring significant airtime limits, and at very low costs.

The high definition regions of interest can also be transmitted in real-time. In some cases the user may pre-select one or more types of tags of interest and request a real-time feed for these. The surrounding highly compressed scene could be optionally combined with the regions of interest.

In summary embodiments address the bandwidth problems associated with transmitting data wirelessly from on-board cameras. Considering one example, a 720p video with at a minimum 24fps using H.265 encoding requires 1.6Mbps bandwidth. This can be transmitted wirelessly using a 4G cellular network or higher, but it's not practically suitable for 3G which can provide upload speeds between 0.4mbps to 2Mbps. Using H.264 encoding the data will be approximately double to 3.17Mbps which is still within the 4G limits. An application which requires the ability will typically need 1080p HD 1,920×1,080, although this depends on the lens. A 720p camera with a narrow lens could be ideal for number plate recognition but typical in-vehicle camera applications require a wider angle lens which necessitates the need for full HD. Consequently this significantly increases bandwidth requirements if live video streaming is required. A 1080p camera using H.265 will require 3.1Mbps, or 5.6Mbps if using the older H.264 standard.

A useful real-time video feed for an in-vehicle camera will require between 1.6Mbps and 5.6Mbps depending on both the camera resolution and the encoder used.

For a continuous remote surveillance application these data rates are either expensive or not practically achievable in many locations due to lack of adequate 4G coverage. Embodiments seek to significantly reduce the video size by capturing multiple high definition regions of interest with low definition contextual background scene.

Although illustrative embodiments of the invention have been disclosed in detail herein, with reference to the accompanying drawings, it is understood that the invention is not limited to the precise embodiment and that various changes and modifications can be effected therein by one skilled in the art without departing from the scope of the invention as defined by the appended claims and their equivalents.

## Claims

1. A method of processing images captured by an on-vehicle camera, said method comprising:
performing scene analysis on image data received from said on-vehicle camera to identify regions of greater interest and regions of lesser interest in images in said image data;
processing said image data to preferentially reduce the information in said regions of lesser interest to generate processed image data; and
compressing at least a portion of said processed image data to generate compressed image data;
receiving data from a telematics device; and
outputting said compressed image data along with at least some telematics data that was sensed at a time that said image date was captured.

2. A method according to claim 1, wherein said step of processing comprises performing edge detection to detect edges in said regions of lesser interest, retaining detected edges and discarding at least some other data to reduce the information of said regions of lesser interest.

3. A method according to any preceding claim, wherein said scene analysis is performed by machine learning algorithms such as deep learning algorithms.

4. A method according to any preceding claim, wherein said scene analysis detects moving objects, at least one of said moving objects being determined to comprise a region of greater interest.

5. A method according to any preceding claim, wherein said step of processing comprises tracking a region of greater interest across a plurality of sequential images and enhancing said region of greater interest within said images by combining information from said plurality of images.

6. A method according to any preceding claim, wherein said data comprises at least one of data from a network of said vehicle, data received from a further vehicle and data received from street furniture.

7. A method according to claim 6, wherein said step of processing comprises determining said regions of greater interest using data received from at least one of said further vehicle and said street furniture.

8. A computer program comprising instructions configured which when executed by a processor are configured to control said processor to perform a method according to any preceding claim.

9. Circuitry for processing image data generated by an on-vehicle camera, said circuitry comprising:
scene analysis circuitry configured to perform scene analysis on said image data to identify regions of greater interest and regions of lesser interest in said images;
processing circuitry configured to process said image data to preferentially reduce the information of said regions of lesser interest;
compression circuitry configured to compress at least a portion of said processed image data to generate compressed image data;
telematics data circuitry configured to receive telematics data; and
output circuitry for outputting at least some of said compressed image data along with at least some telematics data that was sensed at a time that said image date was captured.

10. Circuitry according to claim 9, wherein said processing circuitry is configured to detect edges in said regions of lesser interest, said processing circuitry being configured to retain detected edges and discard at least some other data to reduce the information of said regions of said lesser interest.

11. Circuitry according to any one of claims 9 or 10, wherein said processing circuitry is configured to track a region of greater interest across a plurality of sequential images and to enhance said region of greater interest within said images by combining information from said plurality of images.

12. Circuitry according to any one of claims 9 to 11, wherein said telematics data comprises at least one of data from a network on said vehicle, data received from a further vehicle and data received from street furniture.

13. Circuitry according to any one of claims 9 to 12, wherein said processing circuitry is configured to determine said regions of greater interest using data received from at least one of said further vehicle and said street furniture.

14. An on-vehicle video camera comprising
a lens for capturing images;
an optical sensor for sensing said captured images to generate image data; circuitry according to any one of claims 9 to 13 for processing said image data.

15. A system for capturing and analysing images captured by an on-vehicle camera, said system comprising:
an on-vehicle camera according to claim 14;
an analyser remote from said vehicle configured to receive high information image data relating to a portion of images deemed to be of interest and captured by said camera along with data indicative of a time and location that said image was captured;
a data store configured to store said data;
an input for receiving a user input requesting data identified by at least one of said time and location, said analyser being configured to respond to said request by retrieving image data from said data store corresponding to said at least one of a time and location and outputting said stored image data.
